# EUROPEAN PATENT SPECIFICATION

(11) **EP 2 790 533 B1**
(45) Date of publication and mention of the grant of the patent: **04.04.2018**
(21) Application number: 12798244.5
(22) Date of filing: 26.11.2012
(51) Int. Cl.: A23L 2/44, A23L 3/349, A23L 3/3508, A23L 3/3544, A23L 27/10, A23L 27/20

(54) **ANTIFUNGAL FLAVORING COMPOSITIONS**
FUNGIZIDE AROMASTOFFZUSAMMENSETZUNGEN
COMPOSITIONS AROMATISANTES ANTIFONGIQUES

(30) Priority: 13.12.2011 US 201161569832 P; 13.12.2011 US 201161569838 P
(43) Date of publication of application: 22.10.2014
(73) Proprietor: Firmenich SA, 1211 Geneva 8 (CH)
(72) Inventor: KOMITOPOULOU, Evangelia, Guildford Surrey GU27SX (GB); SKIFF, Ronald H., Plainsboro, New Jersey 08536 (US); VIVIEN CASTIONI, Nathalie, CH-1211 Geneva 8 (CH); LOU, Long In, Plainsboro, NJ 08536 (US)
(74) Representative: Rupp, Christian
(86) International application number: PCT/EP2012/073594
(87) International publication number: WO 2013/087401

(56) References cited:
- EP-A1- 2 332 514
- WO-A1-96/11581
- WO-A1-2005/079573
- WO-A2-2012/107252
- US-A- 4 011 346
- US-A- 5 320 772
- US-A- 5 424 081
- US-A1- 2007 269 563
- US-A1- 2008 152 759
- US-A1- 2009 324 515
- FABRIZIO CARTAA ET AL: "Carbonic anhydrase inhibitors. Inhibition of the [beta]-class enzymes from the fungal pathogens Candida albicans and Cryptococcus neoformans with branched aliphatic/aromatic carboxylates and their derivatives", BIOORGANIC & MEDICINAL CHEMISTRY LETTERS, PERGAMON, ELSEVIER SCIENCE, GB, vol. 21, no. 8, 15 April 2011 (2011-04-15) , pages 2521-2526, XP002680016, ISSN: 0960-894X, DOI: 10.1016/J.BMCL.2011.02.057 [retrieved on 2011-02-17]
- DATABASE WPI Week 200679 Thomson Scientific, London, GB; AN 2006-774178 XP002692977, & JP 2006 290872 A (UNIV HIROSHIMA) 26 October 2006 (2006-10-26)
- AJAIYEOBA E O ET AL: "ESSENTIAL OIL CONSTITUENTS OF AFRAMOMUM MELEGUETA (ROSCOE) K. SCHUM. SEEDS (ALLIGATOR PEPPER) FROM NIGERIA", FLAVOUR AND FRAGRANCE JOURNAL, WILEY, NEW YORK, NY, GB, vol. 14, no. 2, 1 March 1999 (1999-03-01), pages 109-111, XP008054385, ISSN: 0882-5734, DOI: 10.1002/(SICI)1099-1026(199903/04)14:2<109 ::AID-FFJ775>3.0.CO;2-M

## Description

### Technical Field

The present invention relates to compositions having an antifungal effect as well as food products and beverages comprising such compositions. The invention also relates to a method for preserving food products and beverages comprising adding the compositions of the invention to the food product or beverage.

### Background and Prior Art

Preservation of food products and beverages is one of the main problems encountered in the food industry, due to the growth of yeast and moulds in such food products and beverages. Preservative materials having antifungal activity and in particular capable of inhibiting the growth of yeast and mould that are mainly responsible for the spoilage of food products and beverages are therefore the object of constant research.

Several yeast and mould species are known to be responsible for the spoilage of food products and beverages. Mainly, yeast such as *Zygosaccharomyces rouxii, Zygosaccharomyces bailii, Saccharomyces cerevisiae*, *Pichia membranaefaciens, Pichia anomala*, *Candida krusei, Candida albicans*, *Dekkera bruxellensis* and *Dekkera naardensis* and moulds such as *Byssochlamys nivea*, *Byssochlamys fulva, Neosartorya fischeri, Fusarium oxysporum, Aspergillus niger*, *Penicillium crustosum, Penicillium digitatum, Penicillium roqueforti* and *Mucor rouxii* are involved in such food and beverage spoilage.

Since most of the food products and beverages needing preservation are flavored, it would be desirable that the flavoring ingredients also provide antifungal effects since this would reduce the amount of additional antifungal ingredients required. Such antifungal agents will need to be compatible with a number of different preparations, including sweet and savoury foods and drinks.

Several flavoring ingredients are known as having antifungal activity. Some of these ingredients are also used as flavoring compounds. For instance, WO 2009/133272 teaches that carvacrol and thymol are useful as preservative materials, which are active against microbial spoilage of beverages. Similarly, WO 2005/012210 describes the use of several compounds such as perilla acid and geranic acid as conservative materials for food.
It would also be desirable to provide further preservative materials having antifungal activity and especially antifungal flavoring ingredients which are effective at very low dosage since flavoring ingredients cannot normally be used in high amounts without providing an overpowering flavor which is often undesirable to the consumer. Therefore, synergies between flavoring ingredients would be of particular interest.
It is an object of the present invention to provide one or more of the above mentioned benefits and/or to address one or more of the abovementioned problems.

### Summary of the Invention

Accordingly, provided herein is a composition comprising three compounds selected from the group consisiting of 2-methylhexanoic acid, geranic acid, sorbic acid, benzoic acid, propanoic acid and maniguette seed extract.

In a first aspect, the present invention provides a composition comprising a combination of 2-methylhexanoic acid, geranic acid and sorbic acid.

In a second aspect, the present invention provides a composition comprising a combination of benzoic acid, propanoic acid and maniguette seed extract.

In another aspect, the present invention relates to an antifungal agent in the form of a composition comprising a combination of 2-methylhexanoic acid, geranic acid and sorbic acid.

In another aspect, the present invention relates to an antifungal agent in the form of a composition comprising a combination of benzoic acid, propanoic acid and maniguette seed extract.

In a further aspect, the present invention relates to a food product or beverage comprising a composition of the invention.

### Detailed Description of the Invention

The finding that a composition comprising 1) 2-methylhexanoic acid, geranic acid and sorbic acid; or 2) benzoic acid, propanoic acid and maniguette seed extract as well as flavoring compositions comprising such ingredients, have antifungal activity and provide efficient activity as preservative for food products and beverages is surprising and solves the above-mentioned problems.
Preferably the composition is used as antifungal agent in a food product or in a beverage. In other words, the use of a composition as antifungal agent refers to a method for killing, inhibiting or inactivating at least part of one or more strains of fungus, comprising contacting said fungus with the composition. Preferably the one or more strain of fungus is selected from the group consisting of yeast strains *Zygosaccharomyces rouxii, Zygosaccharomyces bailii, Saccharomyces cerevisiae*, *Pichia membranaefaciens, Pichia anomala*, *Candida krusei, Candida albicans*, *Dekkera bruxellensis* and *Dekkera naardensis* and moulds strains *Byssochlamys nivea*, *Byssochlamys fulva, Neosartorya fischeri*, *Fusarium oxysporum, Aspergillus niger*, *Penicillium crustosum, Penicillium digitatum, Penicillium roqueforti* and *Mucor rouxii.* More preferably, the fungal strain is selected from *Zygosaccharomyces rouxii, Zygosaccharomyces bailii, Saccharomyces cerevisiae, Pichia membranaefaciens, Pichia anomala*, *Byssochlamys fulva, Fusarium oxysporum, Aspergillus niger*, *Penicillium crustosum,* and *Mucor rouxii.*

Preferably, the contacting step consists in adding the composition to a food product or to a beverage, in which the one or more strains of fungus are present or are expected to grow.

### Antifungal activity of the compositions

The term "antifungal" is used to mean effective to kill, inhibit or inactivate at least part of one or more strains of fungus, such as yeast and/or mould.

Preferably, it refers to the ability of a composition to effectively inhibit the growth of at least one strain selected form yeast strains *Zygosaccharomyces rouxii, Zygosaccharomyces bailii, Saccharomyces cerevisiae*, *Pichia membranaefaciens, Pichia anomala*, *Candida krusei, Candida albicans*, *Dekkera bruxellensis* and *Dekkera naardensis* and moulds strains *Byssochlamys nivea*, *Byssochlamys fulva, Neosartorya fischeri*, *Fusarium oxysporum, Aspergillus niger*, *Penicillium crustosum, Penicillium digitatum, Penicillium roqueforti* and *Mucor rouxii,* more preferably selected from *Zygosaccharomyces rouxii, Zygosaccharomyces bailii, Saccharomyces cerevisiae*, *Pichia membranaefaciens, Pichia anomala*, *Byssochlamys fulva, Fusarium oxysporum*, *Aspergillus niger*, *Penicillium crustosum,* and *Mucor rouxii.* Even more preferably the composition has antifungal activity against two or more, three or more, or even four or more of the above mentioned strains.

In a preferred aspect of the invention, the compositions used as antifungal ingredients for the purpose of the present invention are capable of having such activity at concentrations of 125 ppm or less and more preferably of 75 ppm or less.

The term "effective" when used to describe the capacity of a composition to inhibit growth of a yeast or mould strain is defined as the ability of such composition to inhibit growth of the strain in a growth medium consisting of a 105g/L sucrose solution with an initial inoculum of 10²-10³ cfu/mL of such yeast or mould strain, so that the average optical density of the growth medium, as measured at 380nm for yeast strains and at 500nm for mould strains, is maintained below 0.2 after 21 days of culture at 25°C under aerobic conditions. The growth medium of which the optical density is measured consists of the growth medium as it is at the end of the 21 days growth period. It therefore consists of the growth medium (sucrose solution at 105 g/L), together with the organisms which were able to grow during the 21 days culture period and the composition of the invention.

For the purposes of the present invention, growth inhibition activity of a given compound against one of the above mentioned strains is measured as follows:

A 105 g/L solution of sucrose in water is prepared. Preferably, the sucrose solution is at pH 3 ±0.2 or at pH 5 ±0.2, in which case the sucrose solution is more preferably autoclaved at 121°C for 15 minutes and the pH is re-checked to ensure it remains within the required range.

Test samples are prepared in a microtiter plate comprising 100µL of one of the sucrose solutions prepared above, together with an initial inoculum of the fungal strain of which growth is intended to be inhibited, so as to achieve a microbial level comprised between 10² and 10³ cfu/mL.

The composition of which the antifungal activity is intended to be evaluated is then added to the microtiter plate. Dilutions of the tested composition in each test sample are prepared to afford the desired final concentration. The microtiter plates are then stored in a standard 25°C incubator under aerobic conditions.

The optical density (OD) of each sample is measured just after addition of the composition (control) and after 21 days of incubation. The OD is measured at 380 nm for yeast strains and at 500 nm for mould strains.

All tests are done in triplicate to ensure statistical relevance of the results obtained.

Growth inhibition of a particular strain by an ingredient at a particular concentration is given if the OD measured after 21 days of culture in these conditions is below 0.2.

### Composition of the invention

The specific combinations of 1) 2-methylhexanoic acid, geranic acid and sorbic acid; and 2) benzoic acid, propanoic acid and maniguette seed extract were identified as being particularly efficient to inhibit growth of the yeast and mould can therefore advantageously be used as antifungal agents for the preservation of food products and beverages.

The composition of the present invention preferably comprises at least one additional flavoring ingredient capable, at a concentration of 1000 ppm or less, of inhibiting the growth of one or more yeast or mould strains selected from *Zygosaccharomyces rouxii, Zygosaccharomyces bailii, Saccharomyces cerevisiae*, *Pichia membranaefaciens, Pichia anomala*, *Candida krusei*, *Candida albicans*, *Dekkera bruxellensis, Dekkera naardensis*, *Byssochlamys nivea, Byssochlamys fulva, Neosartorya fischeri*, *Fusarium oxysporum*, *Aspergillus niger*, *Penicillium crustosum, Penicillium digitatum, Penicillium roqueforti* and *Mucor rouxii* in a growth medium consisting of a 105g/L sucrose solution with an initial inoculum of 10²-10³ cfu/mL of such yeast or mould strain, so that the average optical density of the growth medium, as measured at 380nm for yeast strains and at 500nm for mould strains, is maintained below 0.2 after 21 days of culture at 25°C under aerobic conditions. The antifungal activity of additional ingredients can be assessed using the method described above for assessment of the activity of the composition.

Among such suitable additional ingredients that may be used in combination with any of the three compounds selected from the group consisiting of 2-methylhexanoic acid, geranic acid, sorbic acid, benzoic acid, propanoic acid and maniguette seed extract, one can mention 3,4-dimethylphenol, (+)-(3S,3AS,6R,7AR)-perhydro-3,6-dimethyl-benzo[B]furan-2-one, salicylic acid, carvacrol, dihydro eugenol, farnesol, a mixture of 2-tert-butyl-4-methoxypehenol and 3-tert-butyl-4-methoxyphenol, thymol, 7-methyl-3-octen-2-one, 5-methyl-2-phenyl-2-hexenal, orcinyle (3-methoxy-5-methylphenol), maniguette seed extract, orange extract (for example Tetrarome® orange, origin: Firmenich SA, Geneva, Switzerland), 2-pentylfuran, heptanoic acid, cinnamaldehyde and terpinolene. This list is not exhaustive and the skilled person will, following the protocol detailed above for establishing antifungal activity, readily ascertain whether a flavoring ingredient has the desired antifungal activity. Particularly preferred additional flavoring ingredients include 5-methyl-2-phenyl-2-hexenal, dihydroeugenol, benzoic acid, propanoic acid, maniguette seed extract, terpinolene, 2-methylhexanoic acid, geranic acid and sorbic acid.

More preferably, the composition used in the present invention comprises at least two of such additional ingredients.

The presence of such additional ingredients can still improve the antifungal effect of the composition of the invention. Furthermore, use of additional ingredients reduces the risk of fungal strains getting resistant to the composition of the invention over time.

Whilst the choice of ingredients will be dictated by an antifungal activity they should of course be capable of providing a flavoring effect in the composition or should, at least, be flavor neutral so that they can easily be incorporated into the end products mentioned herein without providing any off note to such product. It is further preferred that the composition of the invention has a balanced flavor profile.

The composition of the invention optionally also comprises solvents, adjuvants, additives and/or other components, generally those of current use in the flavor industry.

In order to ensure optimal antifungal activity, the amount of the compounds each of 2-methylhexanoic acid, geranic acid and sorbic acid, or the amount of each of benzoic acid, propanoic acid and maniguette seed extract, is preferably such that the final concentration in the food product or beverage to which the composition is added is at least 25ppm by weight, more preferably at least 40 ppm by weight, more preferably at least 50 ppm by weight, more preferably between 40 and 100 ppm by weight and most preferably between 60 and 75 ppm by weight, relative to the total weight of the food product or beverage. Using concentrations above 25 ppm or even above 40 ppm increases the antifungal activity. Using concentrations below 100 ppm is preferred because it helps avoiding providing an overpowering flavor to the food product or beverage.

The composition of the present invention is typically incorporated into the final food product or beverage at a level of 0.03 to 1% by weight, more preferably 0.05 to 0.5% by weight, most preferably 0.05 to 0.3% by weight. The concentration of each of the antifungal ingredients in the composition of the invention and the amount of the composition used in the food product or beverage are adjusted so as to achieve the desired concentration of each active ingredient in the food product or beverage. For example, when compositions of the invention comprising 0.2% of each of 2-methylhexanoic acid, geranic acid and sorbic acid or comprising 0.2% of each of benzoic acid, propanoic acid and maniguette seed extract is used to preserve a food product or beverage in an amount of 0.03% by weight relative to the total weight of the food product or beverage the final amount of each of the above-mentioned ingredients in the food product or beverage is of 60 ppm.

The composition of the present invention may be used to replace, in whole or in part, conventional preservative antifungal materials used to preserve food products or beverages of interest, without diminishing preservation of said food product or beverage. By "conventional preservative antifungal materials", it is meant preservative antifungal materials, which are not associated with any flavoring characteristics and often have an undesirable aroma or taste, which must then be masked using known flavor ingredients. The presence of such antifungal agent may further cause throat burn or throat irritation. Artificial antifungal agents also require appropriate labelling, which leads to a commercial drawback.

Alternatively, the compositions of the invention can be used in combination with conventional preservative antifungal agents, in which case this has been found to provide a synergistic effect reinforcing the antifungal character of such ingredients.

By its antifungal and flavoring properties, a composition according to the invention is equally suitable for any type of food product and/or beverage.

The compositions of the invention may contain other constituents which have a positive or synergistic effect on the antifungal activity of the ingredients.

The composition or any ingredient of the composition of the present invention can be incorporated in a delivery system or in a liquid emulsion or may be encapsulated following standard procedures.

Encapsulation of an ingredient or of the composition can be used in food products and is advantageous because it enables controlled release of the ingredient or composition. When the whole composition is encapsulated, it also enables simultaneous release of all ingredients. It is believed that this may further improve the antifungal efficiency of the ingredients and compositions. Encapsulation of the active ingredients also has an advantageous protective effect. Another advantage of encapsulation is that the composition of the invention can be provided in powdered form. The use of encapsulated antifungal agents is particularly advantageous in food products such as chewing-gum, candies and tablets.

The person skilled in the art is well aware of a variety of encapsulation systems which are suitable for these purposes, the following being preferred for their ability of providing very good protection against oxidation.
A first preferred encapsulating system is a glassy matrix within which the composition or ingredient is held. More preferably the encapsulation system is a glassy carbohydrate matrix. The carbohydrate matrix preferably comprises a sugar derivative, more preferably maltodextrin.
Particularly preferred maltodextrins are those with a DE of from 10 to 30, more preferably from 15 to 25, most preferably from 17 to 19.
Typically, the ingredient or composition is admixed with a carbohydrate matrix material and an appropriate amount of a plasticizer, such as water, the mixture is heated within a screw extruder to a temperature above the glass transition temperature of the matrix material so as to form a molten mass capable of being extruded through a die and then the molten mass is extruded using established processes, such as described in the prior art. See, for instance, patent application WO 00/25606, published May 11, 2002 or WO 01/17372, published March 15, 2001, and the documents cited therein. If desired, further carbohydrate matrix components may be present to improve yet further the antioxidant barrier properties.
Other suitable encapsulation systems are described in, for examples, US 4,610, 890 or US 4,707,367.

### Other Flavoring Ingredients

The composition of the present invention optionally comprises at least one flavoring ingredient of current use, typically incorporated into the food product or beverage.

The term "flavoring ingredient of current use" is defined here as encompassing flavoring ingredients or compositions of current use in the flavor industry, of both natural and synthetic origin. It includes single compounds and mixtures. Specific examples of such flavor ingredients may be found in the current literature, e.g. in Fenaroli's Handbook of flavor ingredients, 1975, CRC Press; Synthetic Food adjuncts, 1947 by M.B. Jacobs, edited by Van Nostrand; or Perfume and Flavor Chemicals by S. Arctander, 1969, Montclair, New Jersey (USA). Many other examples of current flavoring ingredients may be found in the patent and general literature available. The flavoring ingredients may be present in the form of a mixture with solvents, adjuvants, additives and/or other components, generally those of current use in the flavor industry.

"Flavoring ingredients" are well known to a person skilled in the art of aromatising as being capable of imparting a flavor or taste to a consumer product, or of modifying the taste and/or flavor of said consumer product, or yet its texture or mouthfeel.

### End Products

The compositions of the invention can be used in any type of food product or beverage to be preserved.

The compositions of the invention are particularly useful when such beverages are sweet beverages, preferably comprising any type of sugar or sugar derivatives. Examples of beverages include carbonated soft drinks, milk drinks, functional soft drinks, juices and nectars, hot drinks, iced tea drinks and alcoholic drinks. Food products in which the compositions of the invention can be advantageously used are sweet as well as savoury products, and in particular all types of food products comprising water, more preferably comprising water and any type of sugar or sugar derivative. Examples of such food products include for example soups, sauce, dressings, marinades, dairy products such as desserts, ice-cream, spreads and cheese, refrigerated food, acidified food, such as for example pickles, meat products and prepared fruits and vegetables.

### Method for preserving a food product or a beverage

The present invention also provides a method for preserving a food product or a beverage comprising adding to such food product or beverage a composition of the invention.

The compositions, the food products and the beverages are as defined above in any general or preferred aspect of the invention. The proportions in which the flavoring ingredient or composition can be added to the food product or the beverage are also as described above.

### Examples

The invention will now be illustrated by way of the following examples. All amounts are percentages by weight unless otherwise stated.

### Example 1

### Preparation of a composition according to the invention and determination of its antifungal activity

Composition A was prepared by admixing the following ingredients in the amount indicated.

**Table 1: Composition A**

| Ingredient | Parts |
|---|---|
| 2-Methylhexanoic acid | 25 |
| Geranic acid | 25 |
| Sorbic acid | 25 |
| Total | 75 |

The antifungal activity of Composition A was then evaluated against the following yeast strains: *Pichia anomala (DSM 70783) Zygosaccharomyces rouxii (NCYC 381), Zygosaccharomyces bailii (DSM 70492), Pichia membranaefaciens (DSM 70369), Saccharomyces cerevisiae (origin: Leatherhead Food Research)* and *Candida krusei (origin: Leatherhead Food Research)* and against the following moulds strains: *Mucor rouxii (DSM 1191*), *Byssochlamys fulva (origin: Leatherhead Food Research), Aspergillus niger (origin: Leatherhead Food Research), Penicillium crustosum (origin: Leatherhead Food Research)* and *Fusarium oxysporum (origin: Leatherhead Food Research).*

A 105 g/L solution of sucrose in water at pH 5 ±0.2 was prepared. The sucrose solution was autoclaved at 121°C for 15 minutes and the pH was re-checked to ensure it remained within the range.

Test samples were then prepared in microtiter plates. An amount of 100µL of sucrose solution prepared above was mixed with an inoculum of 20 µL of one fungal strain, so as to achieve a microbial level comprised between 10² and 10³ cfu/mL.

Composition A was then added to the microtiter plate. Dilutions were prepared in the microtiter plate for each mixture of sucrose solution and inoculum to afford final concentrations of 75 ppm and 125 ppm of Composition A. One well for each mixture of sucrose solution and inoculum was kept free of Composition A, to serve as a control.

The microtiter plates were then stored in a standard 25°C incubator under aerobic conditions.

The optical density (OD) of each sample was measured after 21 days of incubation using a Bio-Tek Synergy™ HT Multi-Mode Microplate Reader (from Labtech International, UK). The wavelength was set to 380 nm for yeast strains and to 500 nm for mould strains.

All tests were done in triplicate to ensure statistical relevance of the results obtained.

The results are summarized in the following table. Letter A (for Active) is indicated when the measured OD was below 0.2. Letter I (for Inactive) is used when the measured OD was of at least 0.2.

**Table 2: Antifungal Activity of Composition A**

| | Composition A | | |
|---|---|---|---|
| | 0 ppm | 75 ppm | 125 ppm |
| Zygosaccharomyces rouxii | I | A | A |
| Zygosaccharomyces bailii | I | A | A |
| Pichia membranaefaciens | I | A | A |
| Pichia anomala | I | A | A |
| Saccharomyces cerevisiae | I | A | A |
| Candida krusei | I | A | A |
| Aspergillus niger | I | A | A |
| Mucor rouxii | I | A | A |
| Byssochlamys fulva | I | A | A |
| Fusarium oxysporum | I | A | A |

These results show that the use of Composition A in a sucrose solution at pH 5 has an antifungal effect against each of the tested fungi, which are part of the main fungal strains responsible for beverage and food spoilage. The efficient concentration against each of these strains was as low as 75 ppm. It can therefore be advantageously used as a preservative composition in such food products or beverages.

### Example 2 (Comparative)

### Antifungal activity of 2-methylhexanoic acid, geranic acid and sorbic acid separately and evidence of the synergistic effect of combining these ingredients.

2-Methylhexanoic acid, geranic acid and sorbic acid were separately tested for their antifungal properties using the method described in Example 1 for evaluation of Composition A, except that dilutions were prepared in the microtiter plate for each mixture of sucrose solution and inoculum to afford final concentrations of 25 ppm, 50 ppm and 75 ppm of the tested ingredient. The results are summarized in the following tables.

**Table 3: Antifungal activity of 2-methylhexanoic acid**

| | 2-Methylhexanoic acid (ppm) | | | |
|---|---|---|---|---|
| | 0 ppm | 25 ppm | 50 ppm | 75 ppm |
| Zygosaccharomyces bailii | I | I | I | I |
| Pichia membranaefaciens | I | I | I | I |
| Pichia anomala | I | I | I | I |

**Table 4: Antifungal activity of geranic acid**

| | Geranic acid (ppm) | | | |
|---|---|---|---|---|
| | 0 ppm | 25 ppm | 50 ppm | 75 ppm |
| Zygosaccharomyces bailii | I | I | I | I |
| Pichia membranaefaciens | I | I | I | I |
| Pichia anomala | I | I | I | I |

**Table 5: Antifungal activity of sorbic acid**

| | Sorbic acid (ppm) | | | |
|---|---|---|---|---|
| | 0 ppm | 25 ppm | 50 ppm | 75 ppm |
| Zygosaccharomyces bailii | I | I | I | A |
| Pichia membranaefaciens | I | I | I | A |
| Pichia anomala | I | I | A | A |

When these results are compared with those obtained in Example 1, it is evident that admixing the three ingredients (as in Composition A) provides a synergistic effect. Indeed, 2-methyl hexanoic acid and geranic acid as single ingredients were inactive against all tested strains even at 75 ppm. Only sorbic acid proved to be active in the form of a single ingredient. However, the latter was active only when used at 75ppm against Zygosaccharomyces bailii, Pichia membranaefaciens and at 50 ppm against Pichia anomala. In contrast an amount of 25 ppm of each of the three ingredients proved to be sufficient to provide antifungal activity against the three strains when all three ingredients were combined in Composition A.

### Example 3

### Preparation of a composition according to the invention and determination of its antifungal activity

Composition B was prepared by admixing the following ingredients in the amount indicated.

**Table 6: Composition B**

| Ingredient | Parts |
|---|---|
| Benzoic acid | 25 |
| Propanoic acid | 25 |
| Maniguette seed extract | 25 |
| Total | 75 |

The antifungal activity of Composition B was then evaluated against the following yeast strains: *Pichia anomala (DSM 70783) Zygosaccharomyces rouxii (NCYC 381), Pichia membranaefaciens (DSM 70369), Saccharomyces cerevisiae (origin: Leatherhead Food Research)* and *Candida krusei (origin: Leatherhead Food Research)* and against the following moulds strains: *Mucor rouxii (DSM 1191), Byssochlamys fulva (origin: Leatherhead Food Research), Aspergillus niger (origin: Leatherhead Food Research), Penicillium crustosum (origin: Leatherhead Food Research)* and *Fusarium oxysporum (origin: Leatherhead Food Research).*

A 105 g/L solution of sucrose in water at pH 5 ±0.2 was prepared. The sucrose solution was autoclaved at 121°C for 15 minutes and the pH was re-checked to ensure it remained within the range.

Test samples were then prepared in microtiter plates. An amount of 100µL of sucrose solution prepared above was mixed with an inoculum of 20 µL of one fungal strain, so as to achieve a microbial level comprised between 10² and 10³ cfu/mL.

Composition B was then added to the microtiter plate. Dilutions were prepared in the microtiter plate for each mixture of sucrose solution and inoculum to afford final concentrations of 75 ppm and 125 ppm of Composition B. One well for each mixture of sucrose solution and inoculum was kept free of Composition B, to serve as a control.

The microtiter plates were then stored in a standard 25°C incubator under aerobic conditions.

The optical density (OD) of each sample was measured after 21 days of incubation using a Bio-Tek Synergy™ HT Multi-Mode Microplate Reader (from Labtech International, UK). The wavelength was set to 380 nm for yeast strains and to 500 nm for mould strains.

All tests were done in triplicate to ensure statistical relevance of the results obtained.

The results are summarized in the following table. Letter A (for Active) is indicated when the measured OD was below 0.2. Letter I (for Inactive) is used when the measured OD was of at least 0.2.

**Table 7: Antifungal Activity of Composition B**

| | Composition B | | |
|---|---|---|---|
| | 0 ppm | 75 ppm | 125 ppm |
| Zygosaccharomyces rouxii | I | A | A |
| Pichia membranaefaciens | I | A | A |
| Pichia anomala | I | A | A |
| Saccharomyces cerevisiae | I | A | A |
| Candida krusei | I | A | A |
| Aspergillus niger | I | A | A |
| Mucor rouxii | I | A | A |
| Byssochlamys fulva | I | A | A |
| Fusarium oxysporum | I | A | A |

These results show that the use of Composition B in a sucrose solution at pH 5 has an antifungal effect against each of the tested fungi, which are part of the main fungal strains responsible for beverage and food spoilage. The efficient concentration against each of these strains was as low as 75 ppm. It can therefore be advantageously used as a preservative composition in such food products or beverages.

### Example 4 (Comparative)

### Antifungal activity of benzoic acid, propanoic acid and maniguette seed extract separately and evidence of the synergistic effect of combining these ingredients.

Benzoic acid, propanoic acid and maniguette seed extract were separately tested for their antifungal properties using the method described in Example 1 for evaluation of Composition B, except that dilutions were prepared in the microtiter plate for each mixture of sucrose solution and inoculum to afford final concentrations of 25 ppm, 50 ppm and 75 ppm of the tested ingredient. The results are summarized in the following tables.

**Table 8: Antifungal activity of benzoic acid**

| | benzoic acid (ppm) | | | |
|---|---|---|---|---|
| | 0 ppm | 25 ppm | 50 ppm | 75 ppm |
| Pichia membranaefaciens | I | I | I | A |
| Pichia anomala | I | I | A | A |

**Table 9: Antifungal activity of propanoic acid**

| | Propanoic acid (ppm) | | | |
|---|---|---|---|---|
| | 0 ppm | 25 ppm | 50 ppm | 75 ppm |
| Pichia membranaefaciens | I | I | I | I |
| Pichia anomala | I | I | I | I |

**Table 10: Antifungal activity of maniguette seed extract**

| | Maniguette seed extract (ppm) | | | |
|---|---|---|---|---|
| | 0 ppm | 25 ppm | 50 ppm | 75 ppm |
| Pichia membranaefaciens | I | I | I | I |
| Pichia anomala | I | I | I | I |

When these results are compared with those obtained in Example 3, it is evident that admixing the three ingredients (as in Composition B) provides a synergistic effect. Indeed, propanoic acid and maniguette seed extract as single ingredients were inactive against tested strains even at 75 ppm. Only benzoic acid proved to be active in the form of a single ingredient. However, the latter was active only when used at 75 ppm against Pichia membranaefaciens and at 50 ppm against Pichia anomala. In contrast an amount of 25 ppm of each of the three ingredients proved to be sufficient to provide antifungal activity against these strains when all three ingredients were combined in Composition B.

## Claims

1. A composition comprising
(i) 2-methylhexanoic acid, geranic acid and sorbic acid; or
(ii) benzoic acid, propanoic acid and maniguette seed extract.

2. A composition according to claim 1, wherein 2-methylhexanoic acid, geranic acid and sorbic acid are each present in an amount of from 40 to 100 ppm, relative to the total weight of a food product or beverage to which the composition is added.

3. A composition according to claim 1, wherein benzoic acid, propanoic acid and maniguette seed extract are each present in an amount of from 40 to 100 ppm, relative to the total weight of a food product or beverage to which the composition is added.

4. A composition according to anyone of claims 1 to 3, which is in the form of an antifungal agent.

5. A composition according to claim 1 further comprising at least one flavoring ingredient capable, at a concentration of 1000 ppm or less, of inhibiting the growth of one or more yeast or mould strains selected from *Zygosaccharomyces rouxii, Zygosaccharomyces bailii, Saccharomyces cerevisiae*, *Pichia membranaefaciens, Pichia anomala*, *Candida krusei, Candida albicans*, *Dekkera bruxellensis, Dekkera naardensis*, *Byssochlamys nivea, Byssochlamys fulva, Neosartorya fischeri, Fusarium oxysporum*, *Aspergillus niger*, *Penicillium crustosum, Penicillium digitatum*, *Penicillium roqueforti* and *Mucor rouxii* in a growth medium consisting of a 105g/L sucrose solution with an initial inoculum of 10²-10³ cfu/mL of such yeast or mould strain, so that the average optical density of the growth medium, as measured at 380nm for yeast strains and at 500nm for mould strains, is maintained below 0.2 after 21 days of culture at 25°C under aerobic conditions.

6. A composition according to claim 5 wherein the flavouring agent is selected from the group consisting of 2-methylhexanoic acid, geranic acid, sorbic acid, benzoic acid, propanoic acid and maniguette seed extract, 3,4-dimethylphenol, (+)-(3S,3AS,6R,7AR)-perhydro-3,6-dimethyl-benzo[B]furan-2-one, salicylic acid, carvacrol, dihydro eugenol, farnesol, a mixture of 2-tert-butyl-4-methoxypehenol and 3-tert-butyl-4-methoxyphenol, thymol, 7-methyl-3-octen-2-one, 5-methyl-2-phenyl-2-hexenal, orcinyle (3-methoxy-5-methylphenol), maniguette seed extract, orange extract (for example Tetrarome®orange, origin: Firmenich SA, Geneva, Switzerland), 2-pentylfuran, heptanoic acid, cinnamaldehyde and terpinolene.

7. A food product or beverage comprising a composition according to any one of claims 1 to 6.

8. A food product or beverage according to claim 7, wherein 2- methylhexanoic acid, geranic acid and sorbic acid are each present in an amount of from 40 to 100 ppm, relative to the total weight of the food product or beverage.

9. A beverage according to claim 7 or 8, which is selected from sweet beverages comprising sugar or a sugar derivative.

10. A beverage according to claim 9, which is selected from carbonated soft drinks, functional soft drinks, juices and nectars, hot drinks, and alcoholic drinks.

11. A food product according to claim 7 or 8, which is selected from soups, sauces, dressings, marinades, dairy products, refrigerated food, acidified food, meat products and prepared fruits and vegetables.

## Patentansprüche

1. Zusammensetzung, umfassend:
(i) 2-Methylhexansäure, Geranylsäure und Sorbinsäure; oder
(ii) Benzoesäure, Propionsäure und Maniguette-Samenextrakt.

2. Zusammensetzung nach Anspruch 1, wobei 2-Methylhexansäure, Geranylsäure und Sorbinsäure bezogen auf das Gesamtgewicht eines Nahrungsmittelprodukts oder Getränks, zu dem die Zusammensetzung zugegeben wird, jeweils in einer Menge von 40 bis 100 ppm vorhanden sind.

3. Zusammensetzung nach Anspruch 1, wobei Benzoesäure, Propionsäure und Maniguette-Samenextrakt bezogen auf das Gesamtgewicht eines Nahrungsmittelprodukts oder Getränks, zu dem die Zusammensetzung zugegeben wird, jeweils in einer Menge von 40 bis 100 ppm vorhanden sind.

4. Zusammensetzung nach einem der Ansprüche 1 bis 3, die in Form eines antimykotischen Mittels vorliegt.

5. Zusammensetzung nach Anspruch 1, ferner umfassend mindestens einen Geschmacksstoff, der bei einer Konzentration von 1.000 ppm oder weniger in der Lage ist, das Wachstum von einem oder mehreren Hefe- oder Schimmelpilzstämmen zu hemmen, die ausgewählt sind aus *Zygosaccharomyces rouxii, Zygosaccharomyces bailii, Saccharomyces cerevisiae, Pichia membranaefaciens, Pichia anomala*, *Candida krusei, Candida albicans*, *Dekkera bruxellensis, Dekkera naardensis*, *Byssochlamys nivea*, *Byssochlamys fulva, Neosartorya fischeri*, *Fusarium oxysporum*, *Aspergillus niger, Penicillium crustosum, Penicillium digitatum, Penicillium roqueforti* und *Mucor rouxii* in einem Wachstumsmedium, bestehend aus 105 g/l Saccharose-Lösung mit einem anfänglichen Inokulum von 10² bis 10³ KBE/ml eines solchen Hefe- oder Schimmelpilzstammes, so dass die mittlere optische Dichte des Wachstumsmediums, die bei 380 nm für Hefestämme und bei 500 nm für Schimmelpilze gemessen wird, nach 21 Tagen Kultur bei 25 °C unter aeroben Bedingungen unter 0,2 gehalten wird.

6. Zusammensetzung nach Anspruch 5, wobei der Geschmacksstoff ausgewählt ist aus der Gruppe bestehend aus: 2-Methylhexansäure, Geranylsäure, Sorbinsäure, Benzoesäure, Propansäure und Maniguette-Samenextrakt, 3,4-Dimethylphenol, (+)-(3S,3AS,6R,7AR)-Perhydro-3,6-dimethyl-benzo[B]furan-2-on, Salicylsäure, Carvacrol, Dihydroeugenol, Farnesol, einer Mischung von 2-*tert*-Butyl-4-methoxyphenol und 3-*tert*-Butyl-4-methoxyphenol, Thymol, 7-Methyl-3-octen-2-on, 5-Methyl-2-phenyl-2-hexenal, Orcinyl (3-Methoxy-5-methylphenol), Maniguette-Samenextrakt, Orangenextrakt (zum Beispiel Tetrarome®-Orange, Herkunft: Firmenich SA, Genf, Schweiz), 2-Pentylfuran, Heptansäure, Zimtaldehyd und Terpinolen.

7. Lebensmittelprodukt oder Getränk, umfassend eine Zusammensetzung nach einem der Ansprüche 1 bis 6.

8. Lebensmittelprodukt oder Getränk nach Anspruch 7, wobei 2-Methylhexansäure, Geranylsäure und Sorbinsäure, bezogen auf das Gesamtgewicht des Nahrungsmittelprodukts oder Getränkes, jeweils in einer Menge von 40 bis 100 ppm vorhanden sind.

9. Getränk nach Anspruch 7 oder 8, das ausgewählt ist aus süßen Getränken, die Zucker oder ein Zuckerderivat aufweisen.

10. Getränk nach Anspruch 9, das ausgewählt ist aus kohlensäurehaltigen Erfrischungsgetränken, funktionellen Erfrischungsgetränken, Säften und Nektaren, Heißgetränken und alkoholischen Getränken.

11. Nahrungsmittelprodukt nach Anspruch 7 oder 8, das ausgewählt ist aus Suppen, Saucen, Dressings, Marinaden, Molkereiprodukten, gekühlten Nahrungsmitteln, angesäuerten Nahrungsmitteln, Fleischprodukten und zubereitetem Obst und Gemüse.

## Revendications

1. Composition comprenant:
(i) de l'acide 2-méthylhexanoïque, de l'acide géranique et de l'acide sorbique; ou bien
(ii) de l'acide benzoïque, de l'acide propanoïque et un extrait de graines de maniguette.

2. Composition selon la revendication 1, dans laquelle l'acide 2-méthylhexanoïque, l'acide géranique et l'acide sorbique sont présents chacun en une quantité allant de 40 à 100 ppm, par rapport au poids total d'un produit alimentaire ou d'une boisson auquel/à laquelle la composition est ajoutée.

3. Composition selon la revendication 1, dans laquelle l'acide benzoïque, l'acide propanoïque et l'extrait de graines de maniguette sont présents chacun en une quantité allant de 40 à 100 ppm, par rapport au poids total d'un produit alimentaire ou d'une boisson auquel/à laquelle la composition est ajoutée.

4. Composition selon l'une quelconque des revendications 1 à 3, qui est sous forme d'un agent antifongique.

5. Composition selon la revendication 1, comprenant en outre au moins un ingrédient aromatisant capable, à une concentration de 1000 ppm ou moins, d'inhiber la croissance d'une ou de plusieurs souches de levure ou de moisissure sélectionnées parmi *Zygosaccharomyces rouxii, Zygosaccharomyces bailii, Saccharomyces cerevisiae, Pichia membranaefaciens, Pichia anomala*, *Candida krusei, Candida albicans*, *Dekkera bruxellensis, Dekkera naardensis*, *Byssochlamys nivea, Byssochlamys fulva, Neosartorya fischeri*, *Fusarium oxysporum*, *Aspergillus niger*, *Penicillium crustosum, Penicillium digitatum, Penicillium roqueforti* et *Mucor rouxii* dans un milieu de croissance consistant en 105 g/l de solution de saccharose avec un inoculum initial de 10²-10³ cfu/ml d'une telle souche de levure ou de moisissure, de telle sorte que la densité optique moyenne du milieu de croissance, telle que mesurée à 380 nm pour les souches de levure et à 500 nm pour les souches de moisissure, est maintenue au-dessous de 0,2 après 21 jours de culture à 25 °C dans des conditions aérobies.

6. Composition selon la revendication 5, dans laquelle l'agent aromatisant est sélectionné parmi le groupe consistant en acide 2-méthylhexanoïque, acide géranique, acide sorbique, acide benzoïque, acide propanoïque et extrait de graines de maniguette, 3,4-diméthylphénol, (+)-(3S,3AS,6R,7AR)-perhydro-3,6-diméthyl-benzo[B]furan-2-one, acide salicylique, carvacrol, dihydro eugénol, farnésol, un mélange de 2-tert-butyl-4-méthoxyphénol et de 3-tert-butyl-4-méthoxyphénol, thymol, 7-méthyl-3-octen-2-one, 5-méthyl-2-phényl-2-hexénal, orcinyle (3-méthoxy-5-méthylphénol), extrait de graines de maniguette, extrait d'orange (par exemple Tetrarome®orange, origine: Firmenich SA, Genève, Suisse), 2-pentylfurane, acide heptanoïque, cinnamaldéhyde et terpinolène.

7. Produit alimentaire ou boisson comprenant une composition selon l'une quelconque des revendications 1 à 6.

8. Produit alimentaire ou boisson selon la revendication 7, dans laquelle l'acide 2-méthylhexanoïque, l'acide géranique et l'acide sorbique sont présents chacun en une quantité allant de 40 à 100 ppm, par rapport au poids total du produit alimentaire ou de la boisson.

9. Boisson selon la revendication 7 ou 8, qui est sélectionnée parmi des boissons sucrées comprenant du sucre ou un dérivé de sucre.

10. Boisson selon la revendication 9, qui est sélectionnée parmi des boissons gazeuses non alcoolisées, des boissons non alcoolisées fonctionnelles, des jus et des nectars, des boissons chaudes et des boissons alcoolisées.

11. Produit alimentaire selon la revendication 7 ou 8, qui est sélectionné parmi des soupes, sauces, assaisonnements, marinades, produits laitiers, aliments réfrigérés, aliments acidifiés, produits de viande et fruits et légumes préparés.
